# EUROPÄISCHE PATENTSCHRIFT

(11) **EP 2 760 678 B1**
(45) Veröffentlichungstag und Bekanntmachung des Hinweises auf die Patenterteilung: **02.03.2016**
(21) Anmeldenummer: 12774925.7
(22) Anmeldetag: 20.09.2012
(51) Int. Cl.: B42D 15/00, G02B 5/04, B41M 3/14, B42D 25/29

(54) **SICHERHEITSELEMENT MIT MEHREREN OPTISCH VARIABLEN STRUKTUREN**
SECURITY ELEMENT HAVING MANY OPTICALLY VARIABLE STRUCTURES
ÉLÉMENT DE SÉCURITÉ PRÉSENTANT PLUSIEURS STRUCTURES OPTIQUEMENT VARIABLES

(30) Priorität: 30.09.2011 DE 102011114647
(43) Veröffentlichungstag der Anmeldung: 06.08.2014
(73) Patentinhaber: Giesecke & Devrient GmbH, 81677 München (DE)
(72) Erfinder: MAYER, Karlheinz, 88167 Grünenbachd (DE); HUYNH, Thanh-Hao, 83052 Bruckmühl (DE); FRANZ, Peter, 85567 Pienzenau/Bruck (DE)
(86) Internationale Anmeldenummer: PCT/EP2012/003941
(87) Internationale Veröffentlichungsnummer: WO 2013/045055

(56) Entgegenhaltungen:
- WO-A2-2011/005889
- DE-A1-102007 035 161
- US-A1- 2007 206 298

## Beschreibung

Die Erfindung betrifft ein Sicherheitselement mit einer optisch variablen Struktur, die eine Vielzahl von ersten Prägestrukturen aufweist. Jede der ersten Prägestrukturen besteht aus mindestens zwei Flanken, die in mindestens einem bestimmten Winkel aufeinander zulaufen. In mindestens einem Teilbereich der optisch variablen Struktur weist mindestens eine Flanke der ersten Prägestrukturen jeweils mindestens eine zusätzliche Prägestruktur auf, die auf die Flanke der ersten Prägestrukturen aufgesetzt oder in die Flanke der ersten Prägestrukturen eingesetzt ist. Die Erfindung betrifft weiterhin ein Werkzeug zur Herstellung dieses Sicherheitselements.

Zur Abwehr von Fälschungsversuchen von Wertdokumenten, wie beispielsweise Banknoten, Wertpapieren, Ausweisen, Kreditkarten, Debit-Karten oder dergleichen, werden ständig neue Sicherheitselemente gesucht. Vorteilhaft sind dabei Elemente, die einen entsprechenden Kippeffekt aufweisen, da diese schwer zu kopieren, aber leicht und ohne Hilfsmittel zu überprüfen sind. Dazu werden bevorzugt Strukturen, wie Punkte oder Linien, verwendet, die durch eine geschickte Anordnung mit einem Untergrunddruck einen Kippeffekt aufweisen.

Aus WO 2006/018232 A1 ist ein gattungsgemäßes Sicherheitselement für Wertdokumente mit einer optisch variablen Struktur bekannt, die eine Prägestruktur und eine Beschichtung aufweist. Die Prägestruktur und die Beschichtung sind so miteinander kombiniert, dass wenigstens Teile der Beschichtung bei senkrechter Betrachtung vollständig sichtbar sind, bei Schrägbetrachtung aber verdeckt werden. Die Prägestruktur besteht aus nicht linienförmigen Prägeelementen, die mit der Beschichtung so kombiniert sind, dass bei Änderung der Betrachtungsrichtung unterschiedliche Informationen sichtbar werden. Zumindest ein Teil der nicht linienförmigen Prägeelemente ist rasterförmig angeordnet und besteht beispielsweise aus Prägeelementen in Form eines Tetraeders, Zylinderabschnittes oder einer Pyramide.

Aus WO 2009/013000 A2 ist ein Sicherheitselement für Wertdokumente mit einer optisch variablen Struktur bekannt, die eine erste Prägestruktur aus ersten Prägeelementen aufweist. Auch diese Prägestruktur ist mit einer zur Oberfläche des Sicherheitselements kontrastierenden Beschichtung so kombiniert, dass wenigstens Teilbereiche der Beschichtung bei Betrachtung aus einem ersten Betrachtungswinkelbereich sichtbar sind, bei Betrachtung unter einem zweiten Betrachtungswinkelbereich aber zumindest teilweise verdeckt werden. Bei einem Kippen des Sicherheitselementes um eine erste Achse entsteht somit ein erster Kippeffekt. Die optisch variable Struktur weist eine zweite Prägestruktur auf, die innerhalb der ersten Prägestruktur angeordnet ist und zusätzlich zu dem ersten Kippeffekt einen zweiten Kippeffekt erzeugt. Hierbei ist die zweite Prägestruktur entweder in die ersten Prägeelemente durch eine teilweise Veränderung der Geometrie der ersten Prägeelemente eingebracht ist oder besteht aus zweiten Prägeelementen, die mit einem bestimmten Winkel jeweils an eine Flanke der ersten Prägeelemente angesetzt sind.

Das Dokument DE 10 2007 035161 A1 offenbart ein Sicherheitselement nach dem Oberbegriff des Anspruchs 1.

Nachteilig bei den genannten Schriften des Standes der Technik ist insbesondere, dass die Prägestrukturen einen mehrfarbig strukturierten Untergrunddruck benötigen, der das Feature entsprechend unterstützt und durch starke Passerschwankungen anfällig für Farbverschiebungen macht. Des Weiteren werden maximal zwei Informationsinhalte in Kombination zu entsprechenden Farbeindrücken ermöglicht. Hierbei sollten möglichst kräftige Farben verwendet werden, welche sich in der Praxis oft als nicht real darstellen, da sie als eine der Untergrundfarben insbesondere bei einer sehr hellen und bunten Ausführung nicht in das Gesamtdesign einer Banknote passen.

Der Erfindung liegt deshalb die Aufgabe zugrunde, ein gattungsgemäßes Sicherheitselement bzw. ein Werkzeug zur Herstellung eines gattungsgemäßen Sicherheitselements derart weiterzubilden, dass die Nachteile des Standes der Technik behoben und der Schutz gegenüber Fälschungen weiter erhöht wird.

Diese Aufgabe wird durch die Merkmale der unabhängigen Ansprüche gelöst. Weiterbildungen der Erfindung sind Gegenstand der abhängigen Ansprüche.

Erfindungsgemäß ist die Geometrie der mindestens einen zusätzlichen Prägestruktur mindestens nahezu invers zu der Geometrie derjenigen Flanke der ersten Prägestruktur ausgeführt, auf der die mindestens eine zusätzliche Prägestruktur aufgesetzt bzw. eingesetzt ist.

Invers bedeutet im Sinne dieser Erfindung, dass die Geometrie der zusätzlichen Prägestruktur der gespiegelten Geometrie der Flanke der ersten Prägestruktur entspricht, wobei die Spiegelebene senkrecht zur Oberfläche des Sicherheitselements, mittig zur Flanke und parallel zur Basislinie der Flanke der ersten Prägestruktur ausgerichtet ist. Diese Spiegelung entspricht einer Drehung der ersten Prägestruktur um 180° um eine Achse, die senkrecht auf der Oberfläche des Sicherheitselements steht. Bei gleichseitigen, symmetrischen ersten Prägestrukturen, beispielsweise bei einer gleichseitigen Pyramide oder einem gleichseitigen Prisma mit jeweils dreieckförmiger Stirnfläche entspricht die Geometrie der zusätzlichen Prägestruktur der Geometrie der Flanke, die der Flanke gegenüberliegt, auf die die zusätzliche Prägestruktur aufgebracht ist.

Nahezu invers bedeutet im Sinne dieser Erfindung, dass die senkrechte Flanke der zusätzlichen Prägestruktur, die sich bei der Spiegelung ergibt, in der Realität aus technischen Gründen nicht vollkommen senkrecht auf der Oberfläche des Sicherheitselements ausgerichtet sein kann. Vielmehr weist diese Flanke einen Winkel von 60° bis 90° zur Oberfläche des Sicherheitselements auf. Dies liegt daran, dass die Vertiefungen in einer Prägeplatte, die die Prägestrukturen des Sicherheitselements erzeugen, weder durch einen Laser noch durch mechanische Fräs- oder Ablatiervorrichtungen mit einer senkrechten Flanke erzeugt werden können.

Ein Werkzeug zur Herstellung derartiger Sicherheitselemente bzw. Prägeelemente ist beispielsweise eine Druckplatte, insbesondere eine Stichtiefdruckplatte, oder eine Prägeplatte, insbesondere eine blindprägende Stichtiefdruckplatte. Eine blindprägende Stichtiefdruckplatte ist hierbei eine Stichtiefdruckplatte, deren Vertiefungen nicht mit Farbe gefüllt sind, so dass das Substrat lediglich verprägt, jedoch nicht an seiner Oberfläche mit einer Farbe beaufschlagt wird.

Gemäß einer bevorzugten Ausführungsform weist der mindestens eine erste Teilbereich eine Umrissform auf, die eine erste Information beinhaltet, wobei die erste Information für einen Betrachter nur unter einem ersten Betrachtungswinkelbereich optisch erkennbar ist. Bei senkrechter Betrachtung des Sicherheitselements ist die erste Information für einen Betrachter nicht erkennbar. Die zusätzliche Prägestruktur mit gegenüber der ersten Prägestruktur inversen Prägeflanken weist somit eine weitere Zusatzinformation auf, die aus verschiedenen Betrachtungswinkeln unterschiedliche Informationen preisgibt, bei direkter Draufsicht aber weitgehend verborgen bleibt.

Gemäß einer weiteren bevorzugten Ausführungsform weist in mindestens einem zweiten Teilbereich der optisch variablen Struktur mindestens eine andere Flanke der ersten Prägestrukturen jeweils mindestens eine zweite zusätzliche Prägestruktur auf, die auf die andere Flanke der ersten Prägestrukturen aufgesetzt oder in die andere Flanke der ersten Prägestrukturen eingesetzt ist. Die Geometrie der mindestens einen zweiten zusätzlichen Prägestruktur ist mindestens nahezu invers zu der Geometrie der anderen Flanke der ersten Prägestruktur ausgeführt, auf der die mindestens eine zweite zusätzliche Prägestruktur aufgesetzt bzw. eingesetzt ist. Auch dieser mindestens eine zweite Teilbereich weist bevorzugt eine Umrissform auf, die eine zweite Information beinhaltet, wobei die zweite Information für einen Betrachter nur unter einem zweiten Betrachtungswinkelbereich optisch erkennbar ist. Es ergeben sich somit mindestens zwei Informationen, die aus unterschiedlichen Betrachtungswinkelbereichen erkennbar sind.

Gemäß einer bevorzugten Ausführungsform weist die Oberfläche der optisch variablen Struktur des Sicherheitselements mindestens in dem Bereich, in dem die ersten Prägestrukturen angeordnet sind, einen einheitlichen Farbton auf. Bevorzugt entspricht dieser Farbton dem Farbton des Substrats des Sicherheitselements, in das die ersten Prägestrukturen eingeprägt sind. Wird die optisch variable Struktur direkt in ein Substrat aus Papier, beispielsweise einer Banknote, eingeprägt, und weist das Substrat in diesem Bereich keinen zusätzlichen Aufdruck auf, so entspricht der Farbton dem Farbton des Papiers. Bei den derzeit aktuellen Euro-Banknoten der ersten Serie ist das Papier jedes Nennwerts unterschiedlich eingefärbt, beispielsweise bei der 50 €-Banknote violett und bei der 100 €-Banknote grün.

Besonders bevorzugt ist jedoch auf das Substrat des Sicherheitselements vor oder nach dem Einbringen der erfindungsgemäßen Prägeelemente ein Aufdruck oder eine Beschichtung mit einem einheitlichen Farbton aufgebracht, der bzw. die einen besonders hohen Kontrast zwischen direkter Beleuchtung und indirekter oder abgeschatteter Beleuchtung aufweist. Es hat sich gezeigt, dass ein metallischer oder metallartig glänzender Farbton einen besonders hohen Kontrast aufweist und damit einen besonders ausgeprägten Kippeffekt hervorruft, da hierbei das auftreffende Licht vor allem spiegelnd und nur zu einem geringen Anteil diffus reflektiert wird. Der Aufdruck bzw. die Beschichtung ist beispielsweise im Siebdruck, als silberfarbener Patch oder als silberfarbene Folie auf das Substrat aufgebracht.

Die Oberfläche des Sicherheitselements ist besonders bevorzugt mit einer reflektierenden oder metallischen oder metallisch reflektierenden Beschichtung versehen, so dass die Oberfläche das auftreffende Licht nahezu spiegelnd reflektiert. Diese Beschichtung, die auf das Substrat aufgebracht ist, ist bevorzugt wie folgt ausgeführt:
- als eine metallische oder metallisch anmutende Siebdruckfarbe,
- als eine Farbe mit optisch variablen Pigmenten, bevorzugt sogenannten OVI-Pigmenten,
- als eine Farbe mit optisch variablen Pigmenten, die zusätzlich magnetisch ausrichtbar sind, bevorzugt sogenannte OVMI-Pigmente,
- als eine Farbe mit optisch variablen Iriodin-Pigmenten z.B. der Fa. Bayer, die im Flexodruck oder Siebdruck aufgebracht ist und bevorzugt mit einem im Offsetdruck aufgebrachten Untergrund kombiniert ist,
- als eine Folie in Form eines Streifens oder Patches, die auf das Substrat appliziert ist,
- als glänzende Offsetfarbe, die bevorzugt eine metallisch glänzende Oberfläche aufweist,
- als glänzende Stichtiefdruckfarbe, die bevorzugt einen schwarzen Farbton aufweist oder farblos ist oder auch eine metallisch glänzende Anmutung aufweisen kann, wie beispielsweise Gold oder Silber.

Ein Prisma im Sinne dieser Erfindung weist eine quadratische oder rechteckförmige Grundfläche auf, wobei von zwei gegenüberliegenden Seiten der Grundfläche jeweils eine quadratische oder rechteckförmige Fläche in einem bestimmten Winkel aufeinander zulaufen und dort, wo sie aufeinandertreffen, eine Kante bilden (siehe hierzu auch Bronstein, Semendjajew "Taschen-buch der Mathematik", Verlag Harri Deutsch, 1989, Kapitel 2.6.2 "Stereomet-rie"). Die beiden Stirnflächen des Prismas sind dreieckförmig. Ein Prisma besteht somit aus einer quadratischen oder rechteckförmigen Grundfläche, zwei quadratischen oder rechteckförmigen Seitenflächen und zwei dreieckförmigen Stirnflächen. Alternativ können die Seitenflächen auch trapezförmig ausgebildet sein, so dass das Prisma die Form eines Walmdaches oder eines Keils aufweist.

Eine Pyramide im Sinne dieser Erfindung weist ebenso wie das Prisma eine quadratische oder rechteckförmige Grundfläche auf. Im Gegensatz zum Prisma laufen jedoch von allen vier Seiten der Grundfläche dreieckförmige Flächen aufeinander zu, die dort, wo sie aufeinandertreffen, eine Spitze bilden (siehe hierzu auch Bronstein, Semendjajew "Taschenbuch der Mathematik", Verlag Harri Deutsch, 1989, Kapitel 2.6.2 "Stereometrie"). Eine Pyramide besteht somit aus einer quadratischen oder rechteckförmigen Grundfläche und vier dreieckförmigen Seitenflächen. Selbstverständlich ist statt einer quadratischen oder rechteckförmigen Grundfläche auch jede andere n-eckige Grundfläche möglich, wobei sich in diesem Fall die sogenannte n-seitige Pyramide ergibt. Beispielsweise ergibt sich bei einer dreieckigen Grundfläche ein Tetraeder.

Besonderer Vorteil des erfindungsgemäßen Sicherheitselements ist, dass es nicht über vergleichsweise einfache Techniken nachgeahmt werden kann. Insbesondere benötigt es zu seiner Herstellung den Einsatz eines Lasers, der zum einen exakt genug Vertiefungen in Prägeplatten herstellen kann und zum anderen die nötige Pulsqualität aufweist, um eine Prägeform dieser Güte herzustellen.

Ebenso benötigt das erfindungsgemäße Sicherheitselement zu seiner Herstellung einen sehr hohen mechanischen Druck auf das zu prägende Substrat, ohne dieses durch Papieran- oder -durchschnitte zu verletzen. Bevorzugt werden die Prägestrukturen mittels des Stichtiefdruckverfahrens hergestellt, das aus dem Banknotendruck bekannt ist und durch Fälscher nicht oder nur mit erheblichem finanziellen und technischen Aufwand nachgeahmt werden kann.

Besonders bevorzugt gehen die Prägestrukturen an den Flanken weich ineinander über, d.h. Flankenwinkel von mehr als 70° sollten möglichst vermieden werden, damit keine Verletzungen des Substrats auftreten können, wie die erwähnten Papieran- oder -durchschnitte bei einem Substrat aus Papier. Insbesondere beeinflusst die Steilheit der Prägestrukturen bzw. deren Flanken das Reißverhalten des Substrates. Besonders bevorzugt sind bei linearen wie beispielsweise prismenförmigen Prägestrukturen die Prägestrukturen geringfügig zur Achse des Prägezylinders gedreht angeordnet, bevorzugt um etwa 5°, damit sie nicht parallel zur Achse des Prägezylinders verlaufen.

Weitere Vorteile des erfindungsgemäßen Sicherheitselements sind, dass das Sicherheitselement ohne Hilfsmittel für den Anwender bzw. den Mann auf der Straße erkennbar ist, eine langzeitstabile Prägestruktur aufweist und als Designmittel verwendet werden kann.

Die Gravurtiefe der Strukturen in einer Prägeplatte zur Herstellung der erfindungsgemäßen Prägestrukturen beträgt 20 µm bis 500 µm, bevorzugt 30 µm bis 150 µm und besonders bevorzugt 50 µm bis 130 µm. Die Höhe der erhabenen Prägestrukturen, die mit einer derartigen Prägeplatte hergestellt werden können, ist abhängig von dem Substrat, in das die Prägestrukturen eingeprägt werden. Bei einem Baumwollsubstrat kann die Höhe der Prägestrukturen beispielsweise etwa 90 % der Gravurtiefe betragen und bei einem Kunststoffsubstrat beispielsweise nur 30 %. Bei pyramidenartigen Prägestrukturen beträgt die Länge einer Pyramidenkante 20 µm bis 4000 µm, bevorzugt 100 µm bis 1000 µm und besonders bevorzugt 120 µm bis 600 µm. Der Abstand zwischen einzelnen Prägestrukturen beträgt 0 µm bis 600 µm, bevorzugt 0 µm bis 300 µm und besonders bevorzugt 2 µm bis 100 µm.

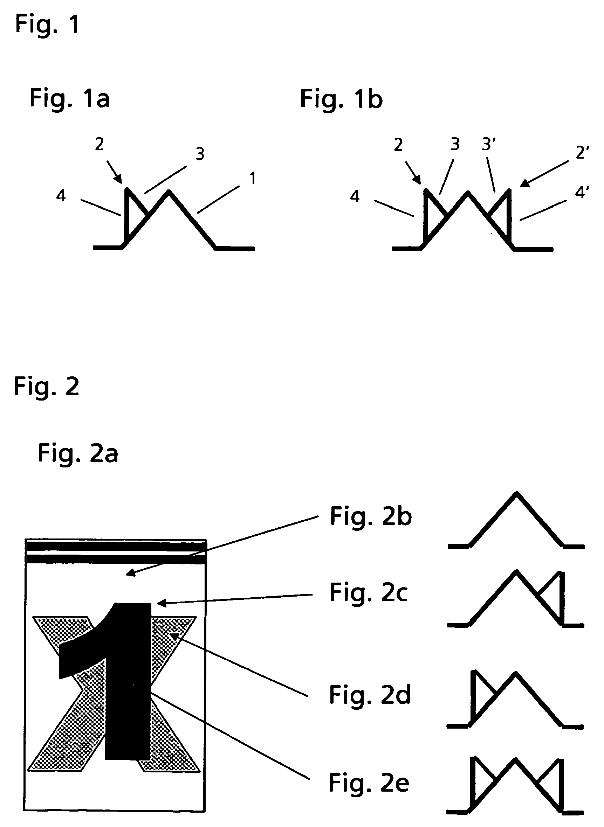

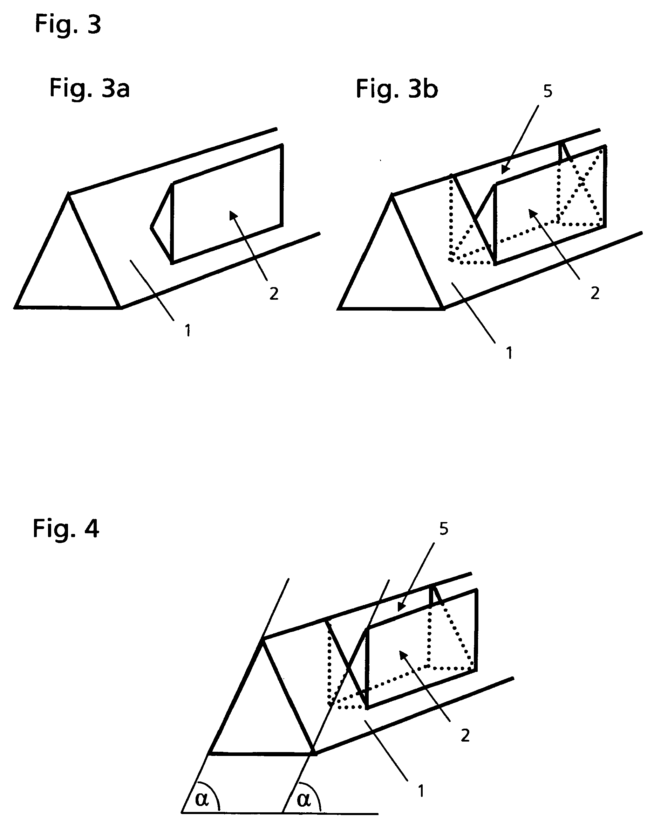

Statt erhabener Prägeelemente sind selbstverständlich auch vertiefte Prägeelemente möglich. Hierbei ragen die Prägeelemente nicht aus der Ebene der Substratoberfläche heraus, sondern bilden Vertiefungen in der Substratoberfläche, die Prägeelemente ragen somit in das Substrat hinein. Eine entsprechende Prägeplatte kann in diesem Fall jedoch nicht Erhöhungen gegenüber dem Prägeplattenniveau aufweisen, da diese den Wischvorgang beispielsweise mittels einer Rakel beeinträchtigen würden. Vielmehr müssen in diesem Fall die Erhöhungen in einem vertieften bzw. abgesenkten Bereich der Prägeplatte eingebracht werden, derart, dass die Erhöhungen nicht über das Prägeplattenniveau herausragen. Diese Strukturen entsprechen somit Strukturen, wie sie beispielsweise aus WO 2010/075979 A1 bekannt sind. So zeigt Fig. 2 der WO 2010/075979 A1 ein entsprechend geprägtes Substrat und Fig. 3 eine Prägeplatte zur Erzeugung von Prägestrukturen der Fig. 2.

Bevorzugt besteht die durch die Prägestrukturen erzeugte Information aus einer Kombination einer alphanumerischen Angabe, beispielsweise einer Wertzahl "50", mit einer weiteren graphischen Angabe, beispielsweise einem "€"-Symbol. In einem ersten Winkelbereich, in dem ein Betrachter auf das Sicherheitselement blickt, sieht der Betrachter hierbei die alphanumerische Angabe und in einem zweiten Winkelbereich die graphische Angabe. Bei senkrechter Betrachtung des Sicherheitselements verschwinden sowohl die alphanumerische Angabe als auch die graphische Angabe, so dass der Betrachter lediglich das verprägte Substrat ohne weitere Informationen bzw. eine nahezu gleichförmige Farbe sieht Die Außenkontur der Verprägung und die Außenkontur der Siebdruck-Metallfläche können noch eine Information bilden. Außerdem kann noch eine feine Linie an der Stelle eingebracht werden, an der die Oberfläche der Platte unberührt bzw. unverprägt bleibt, die eine dritte Information darstellt.

Die Vertiefungen in einer Prägeplatte zur Erzeugung der Prägestrukturen werden bevorzugt mit einem Laser aus die Prägeplatte abgetragen, um ein höheres Aspektverhältnis von Tiefe t zu Breite b der steilen Flanken t/b von 1,5 bis ca. 12, d.h. einen Flankenwinkel von 48° bis 85°, eine größere Geometrievielfalt und schärfere und detaillierte und klar abgrenzenden Informationsinhalte zu erhalten. Dadurch wird die Prägung mechanisch stabiler ausgeführt und die Informationsinhalte an den Seiten deutlich voneinander getrennt wiedergegeben.

Besonders bevorzugt sind die erfindungsgemäßen Prägestrukturen mit einer metallisch anmutenden Grundfläche kombiniert, die beispielsweise im Siebdruck, als silberfarbener Patch oder als silberfarbene Folie auf das Substrat aufgebracht ist.

Besonders bevorzugt werden das Verprägen und das Bedrucken des Substrats in einem Arbeitsgang durchgeführt, indem beispielsweise ein farbführender Stichtiefdruck verwendet wird. Hierbei sind die Vertiefungen einer Stichtiefdruckplatte mindestens teilweise mit einer oder mehreren verschiedenen Farben gefüllt, so dass beim Bedrucken des Bedruckstoffes der Bedruckstoff nicht nur verformt bzw. verprägt, sondern auch mit Farbe beaufschlagt wird.

Das Substrat umfasst vorzugsweise Papier und/oder eine Folie, insbesondere eine transluzente Folie. Im einfachsten Fall besteht das Substrat vollständig entweder aus Papier oder aus Kunststoff. Das Substrat kann jedoch auch bereichsweise aus verschiedenen Materialien bestehen, und insbesondere in einem Bereich aus Papier und zugleich in einem anderen Bereich aus Kunststoff, vorzugsweise aus einer transluzenten Folie, bestehen. Dadurch ist es möglich, verschiedene Materialien als Substrat in einem Arbeitsgang zu verprägen. Unter transluzenter Folie wird hierbei entweder eine transparente oder eine semitransparente Folie verstanden, beispielsweise eine lasierende Folie, welche beispielsweise Polyamid, Polyester, Polyethylen oder biaxial orientiertes Polypropylen (BOPP) enthält.

Gemäß einer bevorzugten Ausführungsform sind die Prägeelemente in eine transluzente Folie eingebracht. Diese transluzente Folie kann beispielsweise eine Öffnung in einem opaken Wertdokument mindestens teilweise abdecken.

Gemäß einer bevorzugten Ausführungsform ist zumindest ein Teil der nicht linienförmigen Prägeelemente taktil erfassbar ausgestaltet, so dass der Betrachter sie nicht nur optisch erkennen, sondern auch beispielsweise mit den Fingerkuppen erfühlen kann.

Wertdokumente im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, und auch kartenförmige Datenträger, insbesondere Chipkarten, sowie Produktsicherungselemente, wie Etiketten, Siegel, Verpackungen und dergleichen. Der Begriff "Wertdokument" umfasst auch nicht umlauffähige Vorstufen solcher Datenträger, die beispielsweise im Fall von Sicherheitspapier in quasi endloser Form vorliegen und zu einem späteren Zeitpunkt weiterverarbeitet werden.

Anhand der nachfolgenden Beispiele und ergänzenden Figuren werden die Vorteile der Erfindung erläutert. Die beschriebenen Einzelmerkmale und nachfolgend beschriebenen Ausführungsbeispiele sind für sich genommen erfinderisch, aber auch in Kombination erfinderisch. Die Beispiele stellen bevorzugte Ausführungsformen dar, auf die jedoch die Erfindung in keinerlei Weise beschränkt sein soll. Die in den Figuren gezeigten Proportionen entsprechen nicht den in der Realität vorliegenden Verhältnissen und dienen ausschließlich zur Verbesserung der Anschaulichkeit.

Im Einzelnen zeigen schematisch:
- Fig.1: eine erfindungsgemäße pyramiden- oder prismenförmige Prägestruktur im Querschnitt bzw. deren Stirnfläche mit einer (Fig.1a) oder zwei (Fig. 1b) zusätzlichen Prägeflanken,
- Fig. 2: eine Anordnung von unterschiedlichen erfindungsgemäßen Prägestrukturen in einem Sicherheitselement,
- Fig. 3: zwei verschiedene Möglichkeiten, eine zusätzliche Prägestruktur aus Fig.1 oder Fig. 2 in die Flanke einer prismenförmigen Prägestruktur einzubringen,
- Fig. 4: eine vorteilhafte Ausführungsform der Prägestruktur aus Fig. 3b,
- Fig. 5: eine Prägeplatte mit Vertiefungen, mit der prismenförmige Prägestrukturen erzeugt werden,
- Fig. 6: ein Ausführungsbeispiel einer erfindungsgemäßen Prägestruktur in Form einer Pyramide in Draufsicht,
- Fig. 7: das Ausführungsbeispiel aus Fig. 6 in Ansicht von schräg oben,
- Fig. 8: ein Sicherheitselement mit einer rasterförmigen Anordnung einer Vielzahl von erfindungsgemäßen Prägestrukturen in Form einer Pyramide in Draufsicht,
- Fig. 9: ein weiteres Sicherheitselement mit einer rasterförmigen Anordnung einer Vielzahl von erfindungsgemäßen Prägestrukturen in Form einer Pyramide in Draufsicht,
- Fig. 10: eine erfindungsgemäße prismenstumpfförmige Prägestruktur mit einer zusätzlichen Information auf der Deckfläche in Form einer einseitig wellenförmigen Vertiefung (links) oder einer Vertiefung in Form von Text (rechts),
- Fig. 11: eine erfindungsgemäße prismenstumpfförmige Prägestruktur mit einer beidseitig wellenförmigen zusätzlichen Prägestruktur (links) oder einer einseitig wellenförmigen zusätzlichen Prägestruktur (rechts).

Fig.1 zeigt ein Substrat im Querschnitt bzw. dessen Stirnfläche, in das eine pyramiden- oder prismenförmige Prägestruktur 1 eingeprägt ist, wobei die Prägestruktur 1 jeweils unterschiedliche Informationen aufweist. In Fig.1a wird die Information an der linken Flanke der Prägestruktur 1 durch eine zusätzliche Prägestruktur 2 gebildet, die aus einer linken Flanke 4 besteht, die nahezu senkrecht zur Ebene des Substrats ausgerichtet ist, und einer rechten Flanke 3, die parallel oder nahezu parallel zur rechten Flanke der Prägestruktur 1 ausgerichtet ist. Parallel oder nahezu parallel bedeutet hierbei, dass der Winkel zwischen der rechten Flanke 3 und dem Substrat gleich bzw. nahezu gleich dem Winkel zwischen der rechten Flanke der Prägestruktur 1 und dem Substrat ist. Damit ist die zusätzliche Prägestruktur 2 invers bzw. nahezu invers ausgeführt zur linken Flanke der Prägestruktur 1. In Fig. 1b werden zwei Informationen durch zwei zusätzliche Prägestrukturen 2 und 2' an der linken und der rechten Flanke der Prägestruktur 1 gebildet. Die zusätzliche Prägestruktur 2' besteht aus einer rechten Flanke 4', die nahezu senkrecht zur Ebene des Substrats ausgerichtet ist, und einer linken Flanke 3', die parallel oder nahezu parallel zur linken Flanke der Prägestruktur 1 ausgerichtet ist. Damit ist die zusätzliche Prägestruktur 2' invers bzw. nahezu invers ausgeführt zur rechten Flanke der Prägestruktur 1. Durch Reflexion des auf die unterschiedlich geneigten Flanken auftreffenden Lichts in unterschiedliche Winkelbereiche ergibt sich ein Kippeffekt.

Zusätzlich ergibt sich ein Kippeffekt durch Verschattung der linken Flanke der Prägestruktur 1 in Fig.1a bzw. beider Flanken in Fig. 1b.

Blickt in Fig. 1a ein Betrachter von oben auf die Prägestruktur 1 oder auf die rechte Flanke der Prägestruktur 1, sieht er die Prägestruktur 1 ohne Verschattung durch die zusätzliche Prägestruktur 2, wohingegen er bei einem Blick auf die linke Flanke diese mit einer Verschattung durch die zusätzliche Prägestruktur 2 sieht und diese damit beispielsweise dunkler erscheint.

Blickt in Fig. 1b ein Betrachter von oben auf die Prägestruktur 1, sieht er die Prägestruktur 1 ohne Verschattung durch die zusätzlichen Prägeflanken 2 und 2', wohingegen er bei einem Blick auf die linke oder rechte Flanke diese mit einer Verschattung durch die zusätzliche Prägestruktur 2 bzw. 2' sieht und diese damit beispielsweise dunkler erscheint. Hierbei wird durch die zusätzliche Prägestruktur 2 eine andere Information dargestellt als durch die zusätzliche Prägestruktur 2', wenn die Gesamtheit aller zusätzlichen Prägeflanken 2 eine andere Umrissform aufweist als die Gesamtheit aller zusätzlichen Prägeflanken 2'. Weist die Gesamtheit beider zusätzlichen Prägeflanken 2 und 2' die gleiche Umrissform auf, stellen beide zusätzlichen Prägeflanken 2 und 2' die gleiche Information dar.

Fig. 2 zeigt beispielhaft eine Anordnung von unterschiedlichen Prägestrukturen in einem rechteckförmigen Sicherheitselement, wobei die jeweiligen prismenförmigen Prägestrukturen unterschiedliche Informationen beinhalten. Das gesamte Sicherheitselement weist eine einheitliche Farbe auf, indem das geprägte Substrat entweder nicht bedruckt ist und das Sicherheitselement somit die Farbe des Substrats aufweist oder indem das Substrat mit einer einheitlichen Farbe bedruckt ist, beispielsweise mit einer metallisch glänzenden Farbe. In Fig. 2a, die das Sicherheitselement in Draufsicht zeigt, sind zur besseren Veranschaulichung die unterschiedlichen Informationen in unterschiedlichen Farben (Weiß, Grau, Schwarz) dargestellt. Im oberen Bereich von Fig. 2a sind zwei waagrechte schwarze Balken dargestellt, die exemplarisch die Ausrichtung der prismenförmigen Prägestrukturen zeigen. Die Flanken bzw. der Grat der prismenförmigen Prägestrukturen verlaufen somit in diesem Ausführungsbeispiel von links nach rechts.

Fig. 2b bis Fig. 2e zeigen den Querschnitt bzw. die Stirnfläche der jeweiligen Prägestruktur aus Fig. 2a.

Fig. 2b zeigt das in Fig. 2a weiß dargestellte Feld, das keine zusätzliche Information enthält, d.h. das Feld erscheint unter nahezu allen Betrachtungswinkeln in einer einheitlichen Farbe. Dieses Feld wird durch eine prismenförmige Struktur gebildet, die keine zusätzliche Prägestruktur aufweist.

Fig. 2c zeigt das in Fig. 2a schwarz dargestellte Feld, dessen Umriss eine erste zusätzliche Information in Form der Ziffer "1" zeigt, die nur unter einem ersten Betrachtungswinkelbereich erkennbar ist. Die Ziffer "1" wird durch eine zusätzliche Prägestruktur gebildet, die sich an der rechten Flanke der prismenförmigen Struktur befindet. Die zusätzliche Prägestruktur führt zu einem veränderten Reflexionsverhalten der mindestens teilweise spiegelnden Oberfläche der gesamten Prägestruktur. Des Weiteren wirft die zusätzliche Prägestruktur einen Schatten auf die rechte Flanke der prismenförmigen Struktur, die somit innerhalb des ersten Betrachtungswinkelbereichs dunkler erscheint als die umliegenden Bereiche. Bei einer Blickrichtung von oben auf die Prägestruktur, d.h. in einem Winkelbereich um die Senkrechte auf das Sicherheitselement, verschwindet die erste zusätzliche Information, d.h. die Ziffer "1".

Fig. 2d zeigt ein graues Feld, dessen Umriss eine zweite zusätzliche Information in Form des Buchstabens "X" zeigt, die nur unter einem zweiten Betrachtungswinkelbereich erkennbar ist, der vom ersten Betrachtungswinkelbereich unterschiedlich ist bzw. diesen nur teilweise überlappt. Der Buchstabe "X" wird durch eine zusätzliche Prägestruktur entsprechend Fig.1a gebildet, die sich an der linken Flanke der prismenförmigen Struktur befindet. Auch diese zusätzliche Prägestruktur führt zu einem veränderten Reflexionsverhalten der mindestens teilweise spiegelnden Oberfläche der gesamten Prägestruktur. Des Weiteren wirft die zusätzliche Prägestruktur einen Schatten auf die linke Flanke der prismenförmigen Struktur, die somit innerhalb des zweiten Betrachtungswinkelbereichs dunkler erscheint als die umliegenden Bereiche. Bei einer Blickrichtung von oben auf die Prägestruktur, d.h. in einem Winkelbereich um die Senkrechte auf das Sicherheitselement, verschwindet die zweite zusätzliche Information, d.h. der Buchstabe "X".

Fig. 2e zeigt den Bereich, in dem sich die erste und die zweite zusätzliche Information überlappen bzw. überlagern. In diesem Bereich ist im ersten Betrachtungswinkelbereich die Ziffer "1" und im zweiten Betrachtungswinkelbereich der Buchstabe "X" zu erkennen, wobei die Prägestruktur entsprechend der Prägestruktur aus Fig. 1b ausgeformt ist. Bei einer Blickrichtung von oben auf die Prägestruktur, d.h. in einem Winkelbereich um die Senkrechte auf das Sicherheitselement, verschwinden sowohl die erste zusätzliche Information, d.h. die Ziffer "1", als auch die zweite zusätzliche Information, d.h. der Buchstabe "X".

Beim Verkippen des Sicherheitselements entlang einer Kipp- bzw. Drehachse, die parallel zu den Flanken bzw. dem Grat der prismenförmigen Prägestrukturen oder auch parallel zu dem unteren oder oberen Rand des Sicherheitselements ausgerichtet ist, sieht ein Betrachter somit Folgendes:
1. bei Betrachtung senkrecht auf das Sicherheitselement eine Fläche in einem einheitlichen Farbton, beispielsweise eine einheitlich silbern glänzende Fläche, d.h. lediglich eine nahezu einförmige Fläche ohne zusätzliche Informationen,
2. innerhalb des ersten Betrachtungswinkelbereichs die Ziffer "1" in einem gegenüber Punkt 1. dunkleren Farbton, d.h. beispielsweise in einer dunkel silbern glänzenden oder matt silbernen Farbe, die umgeben ist von einer Fläche in einem einheitlichen Farbton, d.h. beispielsweise in einer einheitlich silbern glänzenden Farbe,
3. innerhalb des zweiten Betrachtungswinkelbereichs den Buchstaben "X" in einem gegenüber Punkt 1. dunkleren Farbton, beispielsweise in einer dunkel silbern glänzenden oder matt silbernen Farbe, der umgeben ist von einer Fläche in einem einheitlichen Farbton, beispielsweise in einer einheitlich silbern glänzenden Farbe,
4. wobei die Ziffer "1" und der Buchstabe "X" in einem Teilbereich überlappen, so dass in diesem Teilbereich bei senkrechter Betrachtung eine Fläche in einem einheitlichen Farbton, innerhalb des ersten Betrachtungswinkelbereichs die Ziffer "1" in einer gegenüber Punkt 1. dunkleren Farbton und innerhalb des zweiten Betrachtungswinkelbereichs der Buchstabe "X" in einer gegenüber Punkt 1. dunkleren Farbton zu sehen ist.

Fig. 3 zeigt zwei verschiedene Varianten in schräger Ansicht, wie eine zusätzliche Prägestruktur 2 gemäß Fig. 1 oder Fig. 2 auf bzw. in die Flanke der prismenförmigen Prägestruktur 1 auf- bzw. eingebracht sein kann. Gemäß Fig. 3a ist die zusätzliche Prägestruktur 2 auf die Flanke der prismenförmigen Prägestruktur 1 aufgesetzt. Alternativ weist die Flanke gemäß Fig. 3b eine Ausnehmung 5 auf, in die die zusätzliche Prägestruktur 2 eingebracht ist.

Besonders vorteilhaft ist es, wenn gemäß Fig. 4 der Winkel α der linken Flanke der prismenförmigen Prägestruktur 1 und der Winkel α der linken Flanke der zusätzlichen Prägeflanke 2 gleich sind, d.h. die beiden Flanken parallel zueinander ausgerichtet sind.

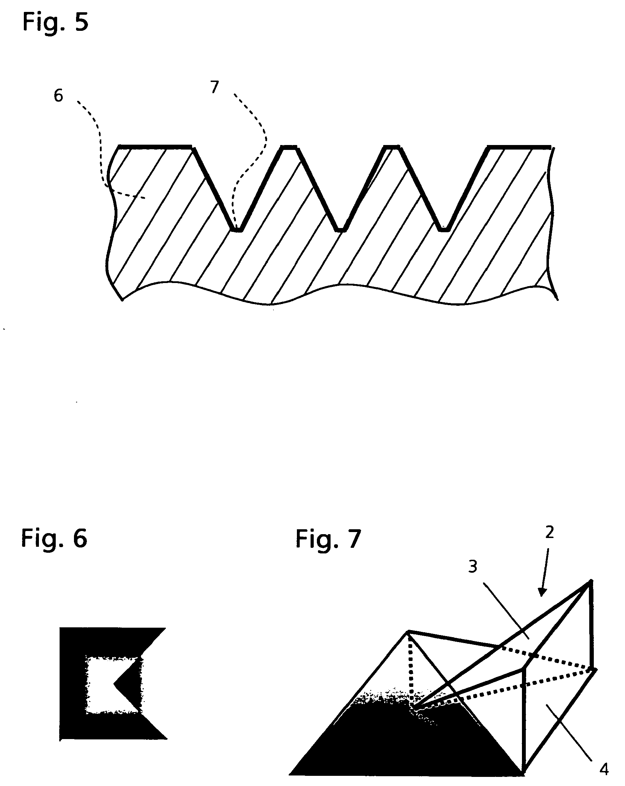

Fig. 5 zeigt einen Querschnitt durch eine Prägeplatte 6 mit Vertiefungen 7, mit der prismen- oder pyramidenförmige Prägestrukturen erzeugt werden. Ein Substrat wird auf die Oberfläche der Prägeplatte 6 aufgelegt, mit hohem mechanischem Druck in die Vertiefungen 7 gepresst und verformt. Vorteilhaft weist die Grundprägelinie eine gerade Oberkante auf, welche stabil der Laserung standhält und stets "unverletzt" gleichbleibend ist.

Des Weiteren können mehr als zwei unterschiedliche Informationen erzeugt und miteinander kombiniert werden, indem beispielsweise die linien- bzw. prismenförmige Prägestruktur aus Fig. 3 und Fig. 4 durch eine pyramidenförmige Prägestruktur mit einer rechteckigen oder quadratischen Grundfläche ersetzt wird. Dies hat den besonderen Vorteil, dass eine Pyramide an vier Seiten unterschiedliche Informationen darstellen kann gegenüber nur zwei unterschiedliche Informationen bei einem Prisma.

Fig. 6 zeigt ein Ausführungsbeispiel einer erfindungsgemäßen Prägestruktur in Form einer Pyramide mit quadratischer Grundfläche in Draufsicht, wobei in die rechte Flanke der Pyramide eine zusätzliche Prägestruktur eingebracht ist. Fig. 7 zeigt das Ausführungsbeispiel aus Fig. 6 in schräger Ansicht. Die rechte Flanke der Pyramide ist vollständig ausgespart und invertiert durch die zusätzliche Prägestruktur 2 wieder "aufgefüllt": an der Stelle, an der die Pyramide ihre maximale Höhe erreicht, weist die zusätzliche Prägestruktur 2 die Höhe Null auf, mit einer ansteigenden Flanke, die ihre maximale Höhe an der Stelle erreicht, an der die Pyramide die Höhe Null aufweisen würde.

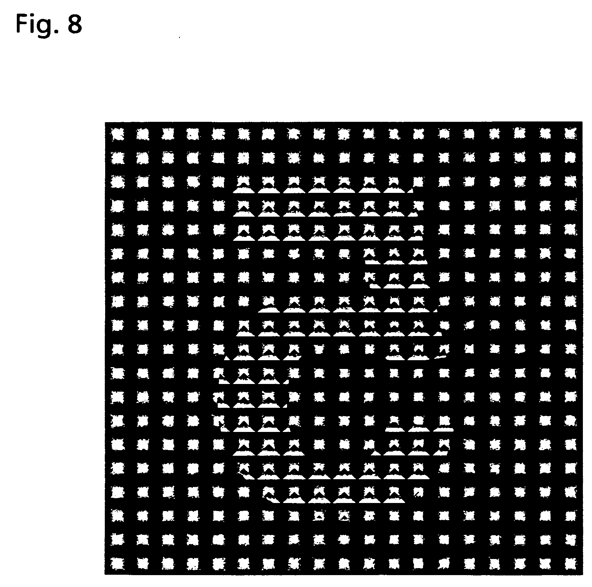

Fig. 8 zeigt ein Sicherheitselement mit einer rasterförmigen Anordnung einer Vielzahl von pyramidenförmigen Prägestrukturen ohne zusätzliche Prägestruktur und von pyramidenförmigen Prägestrukturen mit einer zusätzlichen Prägestruktur gemäß Fig. 6 bzw. Fig. 7 in Draufsicht. Die Prägestrukturen mit einer zusätzlichen Prägestruktur sind hierbei so angeordnet, dass in einem ersten Winkelbereich eine zusätzliche Information in Form einer Ziffer "5" gebildet wird, wobei sie von den pyramidenförmigen Prägestrukturen ohne zusätzliche Prägestruktur umgeben sind.

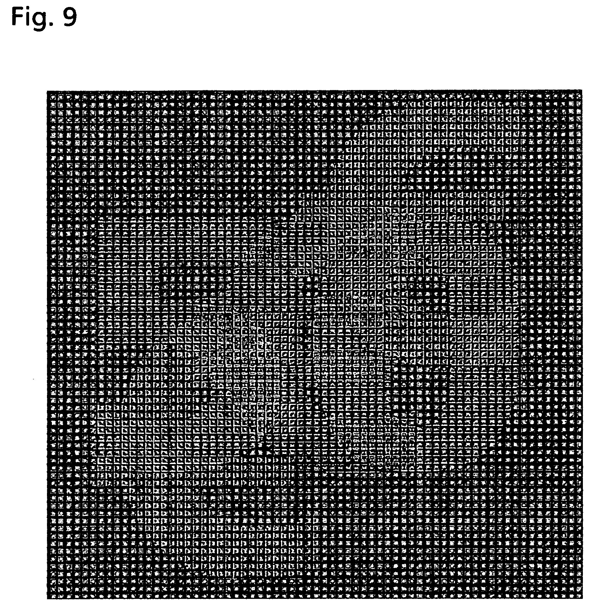

Fig. 9 zeigt ein Sicherheitselement mit einer rasterförmigen Anordnung einer Vielzahl von erfindungsgemäßen Prägestrukturen in Form einer Pyramide in Draufsicht, die in einem ersten Betrachtungswinkelbereich eine zusätzliche Information in Form der Zahl "50" und in einem zweiten Betrachtungswinkelbereich eine geometrische Figur in Form des "€"-Symbols bilden. Die Zahl "50" wird beispielsweise durch Prägestrukturen gemäß Fig. 7 gebildet und das "€"-Symbol durch Prägestrukturen, die ebenfalls denen aus Fig. 7 entsprechen, jedoch um die Hochachse der Pyramide um 180° gedreht bzw. gespiegelt sind, so dass sie die zusätzliche Prägestruktur an ihrer linken Flanke aufweisen. In dem Teilbereich, in dem sich die Zahl "50" und das "€"-Symbol überlappen, weisen die Prägestrukturen an ihrer linken und an ihrer rechten Flanke jeweils eine zusätzliche Prägestruktur auf. Zusätzlich sind noch zwei weitere "€"-Symbole durch Prägestrukturen, die ebenfalls denen aus Fig. 7 entsprechen, jedoch um die Hochachse der Pyramide um 90° bzw. 270° gedreht an anderer Position eingebracht. Diese Informationen werden sichtbar, wenn das Sicherheitselement um 90° oder 270° gedreht und dann verkippt wird. In diesem Beispiel sind also vier verschiedene Informationen unter verschiedenen Dreh- und Betrachtungswinkeln sichtbar.

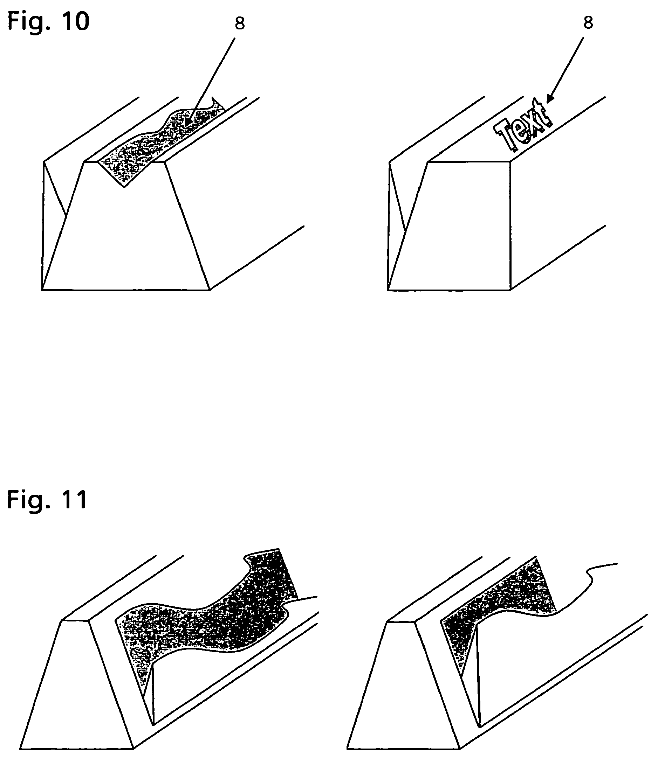

Fig.10 zeigt eine erfindungsgemäße prismenstumpfförmige Prägestruktur mit einer zusätzlichen Information auf der Deckfläche. Diese zusätzliche Information kann, wie in Fig.10 links dargestellt, beispielsweise in Form einer einseitig wellenförmigen Vertiefung ausgeführt sein. Hierbei ist der linke Rand der Vertiefung wellenförmig ausgestaltet und der rechte Rand geradlinig. Alternativ oder zusätzlich kann die zusätzliche Information, wie in Fig. 10 rechts dargestellt, als eine Vertiefung oder ein Aufdruck in Form von Text ausgeführt sein.

Dies hat den Vorteil, dass insbesondere in Draufsicht auf die Prägestruktur eine weitere Information erkennbar wird.

Fig.11 zeigt eine erfindungsgemäße prismenstumpfförmige Prägestruktur mit einer beidseitig wellenförmigen zusätzlichen Prägestruktur (links) oder einer einseitig wellenförmigen zusätzlichen Prägestruktur (rechts). Die Wellenform der Prägestrukturen ergibt sich durch ein unterschiedliches Höhenprofil der jeweiligen Prägeflanke. Dies führt dazu, dass die Höhe der in Fig.11 grau eingefärbten Flanke der zusätzlichen Prägestruktur variiert.

## Patentansprüche

1. Sicherheitselement mit einer optisch variablen Struktur, die eine Vielzahl von ersten Prägestrukturen aufweist, wobei jede der ersten Prägestrukturen aus mindestens zwei Flanken besteht, die in mindestens einem bestimmten Winkel aufeinander zulaufen, und in mindestens einem ersten Teilbereich der optisch variablen Struktur mindestens eine Flanke der ersten Prägestrukturen jeweils mindestens eine zusätzliche Prägestruktur aufweist, die auf die Flanke der ersten Prägestrukturen aufgesetzt oder in die Flanke der ersten Prägestrukturen eingesetzt ist, **dadurch gekennzeichnet, dass,** die Geometrie der mindestens einen zusätzlichen Prägestruktur mindestens nahezu invers zu der Geometrie derjenigen Flanke der ersten Prägestruktur ausgeführt ist, auf der die mindestens eine zusätzliche Prägestruktur aufgesetzt bzw. eingesetzt ist.

2. Sicherheitselement nach Anspruch 1, **dadurch gekennzeichnet, dass** der mindestens eine erste Teilbereich eine Umrissform aufweist, die eine erste Information beinhaltet, wobei die erste Information für einen Betrachter nur unter einem ersten Betrachtungswinkelbereich optisch erkennbar ist.

3. Sicherheitselement nach Anspruch 1 oder 2, **dadurch gekennzeichnet, dass** in mindestens einem zweiten Teilbereich der optisch variablen Struktur mindestens eine andere Flanke der ersten Prägestrukturen jeweils mindestens eine zweite zusätzliche Prägestruktur aufweist, die auf die andere Flanke der ersten Prägestrukturen aufgesetzt oder in die andere Flanke der ersten Prägestrukturen eingesetzt ist und die Geometrie der mindestens einen zweiten zusätzlichen Prägestruktur mindestens nahezu invers zu der Geometrie der anderen Flanke der ersten Prägestruktur ausgeführt ist, auf der die mindestens eine zweite zusätzliche Prägestruktur aufgesetzt bzw. eingesetzt ist.

4. Sicherheitselement nach Anspruch 3, **dadurch gekennzeichnet, dass** der mindestens eine zweite Teilbereich eine Umrissform aufweist, die eine zweite Information beinhaltet, wobei die zweite Information für einen Betrachter nur unter einem zweiten Betrachtungswinkelbereich optisch erkennbar ist.

5. Sicherheitselement nach einem der vorigen Ansprüche, **dadurch gekennzeichnet, dass** die Prägestrukturen eine pyramidenförmige oder prismenförmige Geometrie aufweisen und die Flanken die Seiten- und/ oder Stirnflächen der Prägestrukturen sind.

6. Sicherheitselement nach einem der vorigen Ansprüche, **dadurch gekennzeichnet, dass** die Oberfläche der optisch variablen Struktur mindestens in dem Bereich, in dem die ersten Prägestrukturen angeordnet sind, einen einheitlichen Farbton aufweist.

7. Sicherheitselement nach Anspruch 6, **dadurch gekennzeichnet, dass** das Sicherheitselement aus einem Substrat besteht, in das die ersten Prägestrukturen eingeprägt sind und das einen einheitlichen Farbton aufweist, wobei der Farbton der Oberfläche der optisch variablen Struktur dem Farbton des Substrats des Sicherheitselements entspricht.

8. Sicherheitselement nach Anspruch 6, **dadurch gekennzeichnet, dass** auf die Oberfläche der optisch variablen Struktur ein Aufdruck oder eine Beschichtung mit einem einheitlichen Farbton aufgebracht ist.

9. Sicherheitselement nach Anspruch 8, **dadurch gekennzeichnet, dass** eine reflektierende oder metallische oder metallisch reflektierende Beschichtung, die auf der Oberfläche der Prägeelemente aufgebracht ist, den einheitlichen Farbton erzeugt.

10. Werkzeug zur Herstellung eines Sicherheitselements nach einem der Ansprüche 1 bis 9, wobei das Werkzeug eine Druck- oder Prägeplatte ist, wobei die Gravurtiefe der Strukturen zur Herstellung der erfindungsgemäßen Prägestrukturen 20 µm bis 500 µm, bevorzugt 30 µm bis 150 µm und besonders bevorzugt 50 µm bis 130 µm beträgt und wobei der Abstand zwischen einzelnen Prägestrukturen 0 µm bis 600 µm, bevorzugt 0 µm bis 300 µm und besonders bevorzugt 2 µm bis 100 µm beträgt.

11. Werkzeug nach Anspruch 10, **dadurch gekennzeichnet, dass** die Prägeplatte statt vertiefter Prägestrukturen erhabene Prägestrukturen aufweist, wobei die erhabenen Prägestrukturen in einem vertieften bzw. abgesenkten Bereich der Prägeplatte eingebracht werden, derart, dass die erhabenen Prägestrukturen nicht über das Prägeplattenniveau herausragen.

## Claims

1. A security element with an optically variable structure having a multiplicity of first embossed structures, each of the first embossed structures consisting of at least two flanks which converge at at least one certain angle, and in at least one first partial region of the optically variable structure, at least one flank of the first embossed structures respectively has at least one additional embossed structure which is mounted on the flank of the first embossed structures or inserted into the flank of the first embossed structures, **characterized in that** the geometry of the at least one additional embossed structure is executed so as to be at least near-inverse to the geometry of that flank of the first embossed structure on which the at least one additional embossed structure is mounted or inserted.

2. The security element according to claim 1, **characterized in that** the at least one first partial region has an outline form which contains a first information item, the first information item being optically recognizable to a viewer only in a first viewing-angle range.

3. The security element according to claim 1 or 2, **characterized in that** in at least one second partial region of the optically variable structure, at least one other flank of the first embossed structures respectively has at least one second additional embossed structure which is mounted on the other flank of the first embossed structures or inserted into the other flank of the first embossed structures, and the geometry of the at least one second additional embossed structure is executed so as to be at least near-inverse to the geometry of the other flank of the first embossed structure on which the at least one second additional embossed structure is mounted or inserted.

4. The security element according to claim 3, **characterized in that** the at least one second partial region has an outline form which contains a second information item, the second information item being optically recognizable to a viewer only in a second viewing-angle range.

5. The security element according to any of the above claims, **characterized in that** the embossed structures have a pyramid-shaped or prism-shaped geometry, and the flanks are the lateral and/or end faces of the embossed structures.

6. The security element according to any of the above claims, **characterized in that** the surface of the optically variable structure has a homogeneous color tone at least in the region where the first embossed structures are disposed.

7. The security element according to claim 6, **characterized in that** the security element consists of a substrate into which the first embossed structures are embossed and which has a homogeneous color tone, the color tone of the surface of the optically variable structure corresponding to the color tone of the substrate of the security element.

8. The security element according to claim 6, **characterized in that** the surface of the optically variable structure has applied thereto an imprint or a coating with a homogeneous color tone.

9. The security element according to claim 8, **characterized in that** a reflective or metallic or metallically reflective coating which is applied on the surface of the embossed elements produces the homogeneous color tone.

10. A tool for manufacturing a security element according to any of claims 1 to 9, wherein the tool is a printing or embossing plate, the engraving depth of the structures for manufacturing the embossed structures according to the invention amounting to 20 µm to 500 µm, preferably 30 µm to 150 µm, and particularly preferably 50 µm to 130 µm, and the distance between individual embossed structures amounting to 0 µm to 600 µm, preferably 0 µm to 300 µm, and particularly preferably 2 µm to 100 µm.

11. The tool according to claim 10, **characterized in that** the embossing plate has raised embossed structures instead of recessed embossed structures, the raised embossed structures being formed in a recessed or depressed region of the embossing plate, such that the raised embossed structures do not protrude beyond the embossing-plate level.

## Revendications

1. Élément de sécurité ayant une structure optiquement variable comportant une pluralité de premières structures gaufrées, chacune des premières structures gaufrées consistant en au moins deux flancs qui convergent l'un vers l'autre dans au moins un certain angle, et, dans au moins une première zone partielle de la structure optiquement variable, au moins un flanc des premières structures gaufrées comportant respectivement au moins une structure gaufrée supplémentaire placée sur le flanc des premières structures gaufrées ou insérée dans le flanc des premières structures gaufrées, **caractérisé en ce que** la géométrie de la au moins une structure gaufrée supplémentaire est réalisée de façon au moins presque inverse à la géométrie du flanc de la première structure gaufrée sur lequel la au moins une structure gaufrée supplémentaire est placée ou insérée.

2. Élément de sécurité selon la revendication 1, **caractérisé en ce que** la au moins une première zone partielle comporte une forme de contour qui contient une première information, la première information n'étant visuellement reconnaissable pour un observateur que sous une première plage angulaire d'observation.

3. Élément de sécurité selon la revendication 1 ou 2, **caractérisé en ce que,** dans au moins une deuxième zone partielle de la structure optiquement variable, au moins un autre flanc des premières structures gaufrées comporte respectivement au moins une deuxième structure gaufrée supplémentaire placée sur l'autre flanc des premières structures gaufrées ou insérée dans l'autre flanc des premières structures gaufrées, et **en ce que** la géométrie de la au moins une deuxième structure gaufrée supplémentaire est réalisée de façon au moins presque inverse à la géométrie de l'autre flanc de la première structure gaufrée sur lequel la au moins une deuxième structure gaufrée supplémentaire est placée ou insérée.

4. Élément de sécurité selon la revendication 3, **caractérisé en ce que** la au moins une deuxième zone partielle comporte une forme de contour qui contient une deuxième information, la deuxième information n'étant visuellement reconnaissable pour un observateur que sous une deuxième plage angulaire d'observation.

5. Élément de sécurité selon une des revendications précédentes, **caractérisé en ce que** les structures gaufrées présentent une géométrie pyramidale ou prismatique et **en ce que** les flancs sont les faces latérales et/ou frontales des structures gaufrées.

6. Élément de sécurité selon une des revendications précédentes, **caractérisé en ce que** la surface de la structure optiquement variable présente, au moins dans la zone dans laquelle les premières structures gaufrées sont agencées, une teinte uniforme.

7. Élément de sécurité selon la revendication 6, **caractérisé en ce que** l'élément de sécurité consiste en un substrat dans lequel les premières structures gaufrées sont gaufrées et qui présente une teinte uniforme, la teinte de la surface de la structure optiquement variable correspondant à la teinte du substrat de l'élément de sécurité.

8. Élément de sécurité selon la revendication 6, **caractérisé en ce que,** sur la surface de la structure optiquement variable, une impression ou un revêtement de teinte uniforme est appliqué(e).

9. Élément de sécurité selon la revendication 8, **caractérisé en ce qu'**un revêtement réfléchissant ou métallique ou métallique réfléchissant qui est appliqué sur la surface des éléments gaufrés génère la teinte uniforme.

10. Outil de fabrication d'un élément de sécurité selon une des revendications de 1 à 9, l'outil étant une plaque d'impression ou de gaufrage, la profondeur de gravure des structures pour la fabrication des structures gaufrées selon l'invention étant de 20 µm à 500 µm, de préférence de 30 µm à 150 µm et particulièrement de préférence de 50 µm à 130 µm, et l'écart entre des structures gaufrées distinctes étant de 0 µm à 600 µm, de préférence de 0 µm à 300 µm et particulièrement de préférence de 2 µm à 100 µm.

11. Outil selon la revendication 10, **caractérisé en ce que** la plaque de gaufrage comporte, au lieu de structures gaufrées renfoncées, des structures gaufrées proéminentes, les structures gaufrées proéminentes étant pratiquées dans une zone renfoncée ou abaissée de la plaque de gaufrage, de telle manière que les structures gaufrées proéminentes ne dépassent pas le niveau de la plaque de gaufrage.
